# EUROPÄISCHE PATENTSCHRIFT

(11) **EP 1 798 532 B1**
(45) Veröffentlichungstag und Bekanntmachung des Hinweises auf die Patenterteilung: **21.09.2016**
(21) Anmeldenummer: 06022581.0
(22) Anmeldetag: 30.10.2006
(51) Int. Cl.: G01F 1/84

(54) **Coriolismassendurchflussmessgerät**
Coriolis mass flow meter
Débitmètre massique de Coriolis

(30) Priorität: 15.12.2005 DE 102005060495
(43) Veröffentlichungstag der Anmeldung: 20.06.2007
(73) Patentinhaber: Krohne AG, 4019 Basel (CH)
(72) Erfinder: Hussain, Youssif, Dr., Northampton Northants (GB); Cook, Vince, Earls Barton Northants (GB); Rolph, Chris, Northampton Northants (GB); Wang, Tao, Wellingborough Northants (GB)
(74) Vertreter: Gesthuysen Patent- und Rechtsanwälte

(56) Entgegenhaltungen:
- DE-A1- 3 046 793
- JP-A- 8 338 749
- JP-A- H08 254 452

## Beschreibung

Die Erfindung betrifft ein Massendurchflußmeßgerät, das nach dem Coriolis-Prinzip arbeitet und zwei Meßrohre sowie einen Schwingungswandler aufweist.

Derartige Coriolis-Massendurchflußmeßgeräte mit zwei oder mehr Meßrohren weisen typischerweise zwei zumindest abschnittsweise parallel verlaufende Meßrohre auf, zwischen denen als Schwingungswandler wenigstens ein Schwingungserreger sowie wenigstens ein Schwingungsaufnehmer vorgesehen sind. Dabei können die beiden Meßrohre in unterschiedlicher Weise zueinander in Schwingungen versetzt werden, wobei die Masse eines durch die Meßrohre strömenden Mediums typischerweise über eine Phasenverschiebung der erzielten Schwingungen der Meßrohre gegenüber der Anregungsschwingung bzw. zwischen zwei voneinander beabstandeten Orten der Meßrohre ermittelt wird.

Sind bei dem Coriolis-Massendurchflußmeßgerät genau zwei gerade, parallel verlaufende Meßrohre vorgesehen, so wird im allgemeinen eine gegenphasige Schwingungsanregung der beiden Meßrohre in ihrer gemeinsamen Ebene in einer Resonanzfrequenz gewählt. Vorteilhaft gegenüber Coriolis-Meßgeräten mit nur einem einzigen Meßrohr ist dabei, daß sich aufgrund der Schwingungen der Schwerpunkt des schwingenden Systems nicht ändert. Von außen gesehen verhält sich das Coriolis-Massendurchflußmeßgerät mit zwei geraden, parallel verlaufenden Meßrohren also schwingungsmäßig neutral, so daß keine Störungen durch Eigenvibration befürchtet werden müssen, da nur die beiden Meßrohre schwingen, während ein für das Coriolis-Massendurchflußmeßgerät vorgesehenes Gehäuse ruhig bleibt. Auf diese Weise kann eine hohe Nullpunktstabilität erzielt werden.

Die JP H08 254452 A zeigt beispielsweise ein Massedurchflussmessgerät, das nach dem Coriolis-Prinzip arbeitet und zwei gerade Messrohre und einen Schwingungswandler aufweist. An den Messrohren ist jeweils ein Träger befestigt, wobei der Schwingungswandler zwischen den beiden Trägern wirkt. Die Träger sind wiederum in einem mittleren Bereich an einem der Messrohre befestigt. Die Schwingungsaufnehmer sind beidseitig der Messrohre zwischen den Trägern aktiv.

Problematisch bei aus dem Stand der Technik bekannten Coriolis-Massendurchflußmeßgeräten mit wenigstens zwei Meßrohren ist unter anderem, daß sie in der Herstellung aufwendig und teuer sind. Im allgemeinen wird nämlich jedes Gerät einzeln von Hand gefertigt, um den geforderten geringen Toleranzen gerecht zu werden und um die einzelnen Einrichtungen des Coriolis-Massendurchflußmeßgeräts, wie Schwingungserreger und Schwingungsaufnehmer, überhaupt korrekt anbringen zu können.

Damit ist es die Aufgabe der Erfindung, ein derartiges Coriolis-Massendurchflußmeßgerät anzugeben, das auf einfache Weise mit hoher Präzision und in unterschiedlichen Abmessungen hergestellt werden kann.

Ausgehend von dem eingangs beschriebenen Coriolis-Massendurchflußmeßgerät ist diese Aufgabe dadurch gelöst, daß an den Meßrohren jeweils ein Träger befestigt ist, ein jeder Träger jeweils an genau ein Meßrohr angesetzt ist und der Schwingungswandler derart ausgebildet und angeordnet ist, daß er zwischen den beiden Trägern wirkt, wobei die Träger jeweils in einem mittleren Bereich an einem der Messrohre befestigt sind, wobei als Schwingungswandler ein Schwingungsaufnehmer vorgesehen ist, der auf einer Seite der Messrohre zwischen den Trägern wirkt, und auf der dem Schwingungsaufnehmer gegenüberliegenden Seite eine lediglich passiv wirkende Ausgleichsmasse vorgesehen ist.

Erfindungsgemäß ist also vorgesehen, daß der Schwingungswandler, also ein Schwingungsaufnehmer, nicht direkt zwischen den beiden Meßrohren wirkt, um diese z. B. zu gegenphasigen Schwingungen anzuregen, sondern zwischen zwei Trägern, die ihrerseits jeweils an einem der Meßrohre befestigt sind. Dabei sind verschiedene geometrische Konstruktionen möglich. Gemäß einer bevorzugten Weiterbildung der Erfindung ist jedoch vorgesehen, daß die Träger derart ausgebildet und angeordnet sind, daß am Ort der Anbringung der Träger der für den Schwingungswandler zur Verfügung stehende Abstand zwischen den beiden Trägern größer ist als der Abstand zwischen den beiden Meßrohren. Auf diese Weise ist unter anderem der Vorteil erzielbar, daß die beiden Meßrohre mit nur äußerst geringem Abstand zueinander vorgesehen werden können und es gleichwohl noch möglich bleibt, einen zwischen den beiden Meßrohren wirkenden Schwingungswandler, also einen Schwingungsaufnehmer zum Erfassen der erzielten Schwingungen, anzuordnen. Damit sind Coriolis-Massendurchflußmeßgeräte mit sehr geringen Abmessungen, nämlich insbesondere mit geringem Abstand zwischen den beiden Meßrohren erzielbar, was unter anderem schwingungstechnische Vorteile aufweist.

Grundsätzlich können die beiden Meßrohre in unterschiedlicher Weise zueinander verlaufen. Gemäß einer bevorzugten Weiterbildung der Erfindung ist jedoch vorgesehen, daß die beiden Meßrohre wenigstens abschnittsweise parallel zueinander verlaufen. Dabei ist gemäß einer bevorzugten Weiterbildung der Erfindung ferner vorgesehen, daß die Träger in dem Bereich angeordnet sind, in dem die beiden Meßrohre abschnittsweise parallel verlaufen.

Erfindungsgemäß ist vorgesehen, daß die Träger jeweils in einem mittleren Bereich an einem der Meßrohre befestigt sind. Das heißt also, daß die Träger in einem Bereich zwischen ihren beiden Enden an einem jeweiligen Meßrohr befestigt sind, so daß die jeweiligen Enden zur Anbringung eines Schwingungswandlers oder einer Ausgleichsmasse zur Verfügung stehen. Dabei kann eine Befestigung des Trägers an einem Meßrohr genau in der Mitte des Trägers vorgesehen sein, dies ist jedoch nicht zwingend erforderlich, so daß der Träger auf verschiedenen Seiten eines jeweiligen Meßrohrs sich unterschiedlich weit vom Meßrohr weg erstrecken kann.

Dabei kann vorgesehen sein, daß die Träger senkrecht zu der durch die parallel zueinander verlaufenden Meßrohre aufgespannte Ebene angeordnet sind. Es kann jedoch auch vorgesehen sein, daß lediglich die Verbindungslinie zwischen den zur Anbringung eines Schwingungswandlers bzw. einer Ausgleichsmasse vorgesehenen Enden der Träger senkrecht zu der durch die parallel zueinander verlaufenden Rohre aufgespannten Ebene verläuft. Auf diese Weise werden symmetrische Ausgestaltungen erzielt, die die Konstruktion besonders einfach machen. Gleichwohl sind auch nichtsymmetrische Konstruktionen möglich.

Wie schon zuvor ausgeführt, ist als Schwingungswandler ein Schwingungsaufnehmer vorgesehen. Typischerweise sind bei einem Coriolis-Massendurchflußmeßgerät mit zwei zumindest abschnittsweise parallel zueinander verlaufenden Meßrohren ein Schwingungserreger und zwei Schwingungsaufnehmer vorgesehen.

Aus dem Stand der Technik ist bekannt als Schwingungswandler einen Schwingungserreger vorzusehen, der beidseitig der Meßrohre zwischen den Trägern aktiv wirkt. Das bedeutet, daß dieser Schwingungserreger die zu Schwingungen der Meßrohre führenden Kräfte nicht nur auf einer Seite der Meßrohre ausübt, sondern auf beiden Seiten, und zwar vorzugsweise symmetrisch.

Die Realisierung eines derartigen Schwingungserregers kann z. B. über zwei Wandlereinrichtungen aus jeweils einer Magnetspule und einem in die Magnetspule hineinreichenden Magneten erfolgen, wie sie als solche aus dem Stand der Technik gut bekannt sind. Diese Einrichtungen werden dann auf einander gegenüberliegenden Seiten zwischen den beiden an einem jeweiligen Meßrohr befestigten Träger angeordnet, so daß bei gleicher Ansteuerung der beiden Wandlereinrichtungen z. B. eine gegenphasige Schwingung der Meßrohre zueinander praktisch ohne zusätzlich erzeugte Torsionsschwingungen erzielt werden kann.

Erfindungsgemäß ist vorgesehen, daß als Schwingungswandler ein derartiger Schwingungsaufnehmer vorgesehen ist, der lediglich auf einer Seite des Meßrohrs zwischen den Träger wirkt. Das bedeutet, daß z. B. nur eine einzige Wandlereinrichtungen aus einer Magnetspule und eines in die Magnetspule hineinreichenden Magneten vorgesehen ist, die auf einer Seite der Meßrohre vorgesehen ist, während auf der anderen Seite der Meßrohre keine Erfassung der Schwingungen der Meßrohre erfolgt. Dabei ist erfindungsgemäß vorgesehen, daß auf der dem Schwingungsaufnehmer gegenüberliegenden Seite eine Ausgleichsmasse vorgesehen ist, vorzugsweise mit einer derartigen Masse, die der Masse des Schwingungsaufnehmers auf der anderen Seite entspricht. Auf diese Weise wird wieder eine symmetrische Konstruktion erzielt, mit der Torsionsschwingungen der Meßrohre weitestgehend unterdrückt werden.

Schließlich können die Träger auf unterschiedliche Weisen und längs unterschiedlicher Bereich an den Meßrohren befestigt werden. Gemäß einer bevorzugten Weiterbildung der Erfindung ist jedoch vorgesehen, daß die Träger jeweils längs eines 180° übersteigenden Umfangsbereichs an einem jeweiligen Meßrohr befestigt sind. Das bedeutet, daß ein jeweiliger Träger längs eines Bereichs an einem jeweiligen Meßrohr befestigt ist, der mehr als die Hälfte des Umfangs des Meßrohrs ausmacht, wodurch zusätzlich Torsionsschwingungen der Meßrohre unterdrückt werden.

Zuvor ist mehrfach ausgeführt worden, welche Maßnahmen geeignet sind, um Torsionsschwingungen der Meßrohre zu unterdrücken. Eine solche Unterdrückung von Torsionsschwingungen ist insbesondere dann gewünscht, wenn eine gegenphasige Schwingung der beiden Meßrohre erzielt werden soll. Gleichwohl ist die vorliegende Erfindung, also das Vorsehen von Trägern an den Meßrohren für einen Schwingungswandler, grundsätzlich auch für Fälle geeignet, in denen bewußt Torsionsschwingungen angeregt werden sollen.

Nachfolgend wird die Erfindung anhand eines bevorzugten Ausführungsbeispiels der Erfindung unter Bezugnahme auf die Zeichnung im Detail erläutert.

In der Zeichnung zeigt
- Fig. 1: die Gesamtkonstruktion eines Coriolis-Massendurchflußmeßgeräts gemäß einem bevorzugten Ausführungsbeispiel der Erfindung in perspektivischer Ansicht,
- Fig. 2: die miteinander verbundenen Meßrohre des Coriolis-Massendurchflußmeßgeräts gemäß dem bevorzugten Ausführungsbeispiel der Erfindung mit daran angebrachten Trägern für einen Schwingungserreger und zwei Schwingungsaufnehmer,
- Fig. 3a, b: die Konstruktion für einen Schwingungserreger und
- Fig. 4a, b: die Konstruktion für einen Schwingungsaufnehmer.

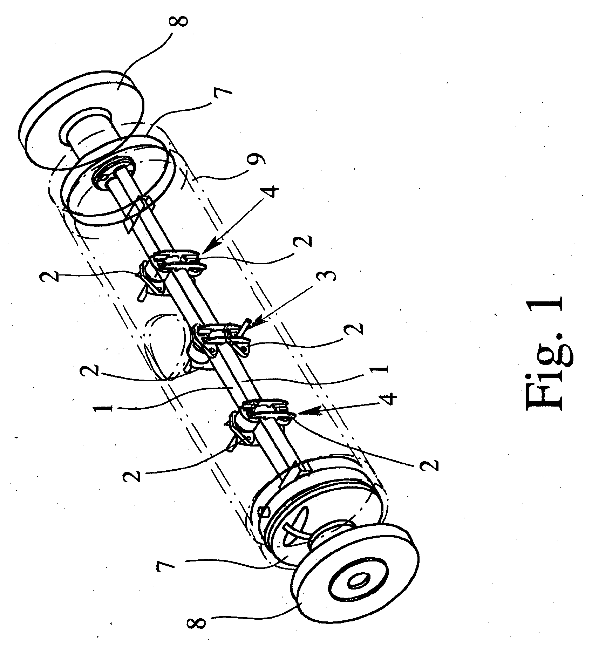

Wie aus Fig. 1 ersichtlich, die die Gesamtkonstruktion des Coriolis-Massendurchflußmeßgeräts gemäß dem vorliegend beschriebenen bevorzugten Ausführungsbeispiel der Erfindung zeigt, weist das Meßgerät zwei gerade Meßrohre 1 auf, die über ihre gesamte Länge parallel zueinander verlaufen. An jedem Meßrohr sind jeweils drei Träger 2 befestigt, und zwar derart, daß ihre Längserstreckung senkrecht zu der durch die beiden parallel zueinander verlaufenden Meßrohre 1 aufgespannten Ebene verläuft.

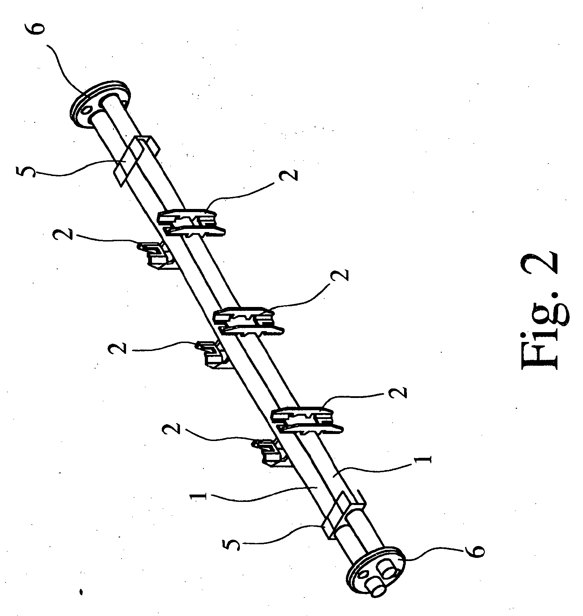

Wie insbesondere auch aus Fig. 2 und den Fig. 3a, b und 4a, b ersichtlich, sind die Träger 2 jeweils von außen her an ein Meßrohr 1 angesetzt, wobei die Träger 2 ferner derart ausgebildet sind, daß der für die Anordnung eines Schwingungswandlers, wie eines Schwingungserregers 3 oder eines Schwingungsaufnehmers 4, verfügbare Abstand zwischen den Trägern 2 größer ist als der Abstand zwischen den beiden Meßrohren 1. Dies ist vorteilhaft für die Anbringung der Schwingungswandler bei geringen Abmessungen des Meßgeräts, insbesondere bei geringem Abstand zwischen den beiden Meßrohren 1, und weist auch schwingungstechnische Vorteile auf. Im übrigen werden auf diese Weise geringste Abstände zwischen den beiden Meßrohren 1 überhaupt erst möglich.

Die beiden Meßrohre 1 sind mittels zweier Schwingungsknotenplatten 5, sogenannten Node Plates, miteinander verbunden. Diese beiden Schwingungsknotenplatten 5 definieren den eigentlichen Meßbereich der Meßrohre, innerhalb dessen die Schwingungsauslenkung der Meßrohre 1 zueinander erfolgt. An den Enden der beiden Meßrohre 1 ist jeweils eine Verbindungsplatte 6 vorgesehen, mittels derer das System aus den beiden Meßrohren 1, den Trägern 2, dem Schwingungserreger 3, den Schwingungsaufnehmern 4 und der Schwingungsknotenplatten 5 über Anschlußstücke 7 mit Endflanschen 8 des Coriolis-Massendurchflußmeßgeräts verbunden sind. Zwischen den Anschlußstücken 7 erstreckt sich ein Gehäuse 9, das die Meßrohre 1 mit ihren Einrichtungen umschließt und schützt.

Aus den Figuren im einzelnen nicht ersichtlich sind Rohrübergänge von einem Rohr auf zwei Rohre, nämlich von dem einzelnen Rohr des Rohrleitungssystems, in das das Coriolis-Massendurchflußmeßgerät eingebaut ist, auf die beiden Meßrohre 1 des Geräts. Diese Rohrübergänge befinden sich im Bereich der Anschlußstücke 7 und gewährleisten einen symmetrischen Übergang von einem einzelnen Rohr auf die beiden Meßrohre 1 und am anderen Ende der Meßrohre 1wieder zurück auf ein einzelnes Rohr.

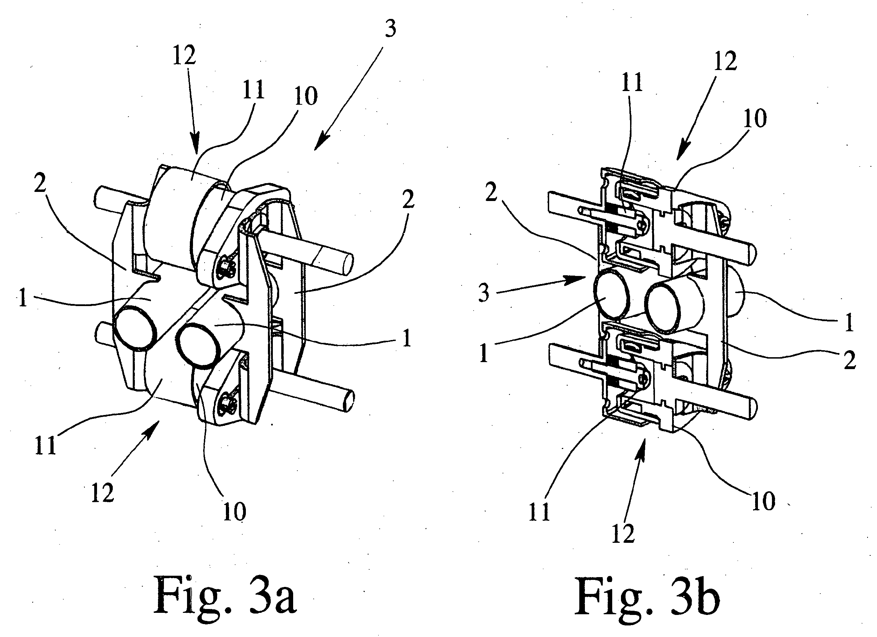

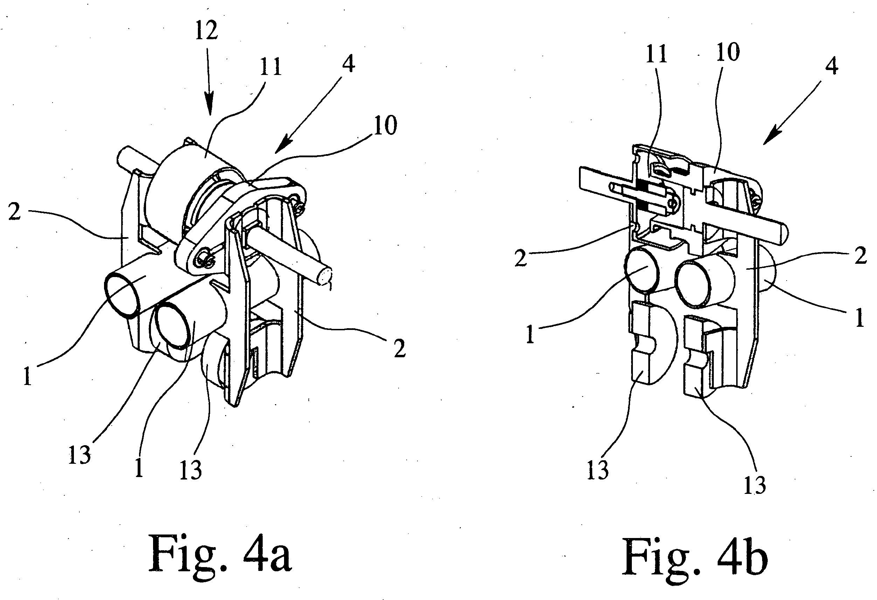

Aus den Fig. 3a, b und 4a, b ist nun im einzelnen ersichtlich, wie der Schwingungserreger 3 bzw. die Schwingungsaufnehmer 4 an den Meßrohren 1 befestigt sind. In beiden Fällen sind zwei Träger 2 vorgesehen, die jeweils von außen her an eines der beiden parallel zueinander verlaufenden Meßrohre 1 angesetzt, vorzugsweise angeschweißt, sind. Damit verlaufen die Träger 2 an der jeweiligen Außenseite der Meßrohre 1 im wesentlichen senkrecht zu der durch die Meßrohre 1 aufgespannten Ebene. Die Träger 2 sind symmetrisch aufgebaut und in ihrem mittleren Bereich jeweils an einem Meßrohr 1 befestigt. Damit reichen die Träger 2 beidseitig der Meßrohre 1 jeweils gleich weit heraus.

In den Endbereichen der Träger 2 sind nun jeweils eine Magnetspule 10 und ein in diese hineinreichender Magnet 11 vorgesehen, so daß der Schwingungserreger insgesamt durch zwei Wandlereinrichtungen 12 mit jeweils einer Magnetspule 10 und einem in diese hineinreichenden Magneten 11 gebildet wird. Dabei ist vorliegend eine derartige Schwingungsanregung vorgesehen, bei der die beiden Wandlereinrichtungen 12 des Schwingungserregers 3 auf dieselbe Weise angesteuert werden, so daß zwischen den Trägern 2 beidseitig gleiche Kräfte wirken, die insgesamt zu einer gegenphasigen Schwingungsanregung der Meßrohre 1 führen, und zwar praktisch ohne daß Torsionsschwingungen der Meßrohre 1 angeregt werden.

Zur Unterdrückung der Anregung von Torsionsschwingungen ist im übrigen vorgesehen, daß die Träger 2 längs eines Umfangsbereichs an einem jeweiligen Meßrohr 1 befestigt sind, der 180° übersteigt. Diese Art der Befestigung der Träger 2 an den Meßrohren 1 ist sowohl im Falle des Schwingungserregers 3 als auch im Falle der Schwingungsaufnehmer 4 vorgesehen.

Anders als beim Schwingungserreger sind bei den Schwingungsaufnehmern jedoch statt einer zweiten Wandlereinrichtung zwei Ausgleichsmassen 13 vorgesehen. Das heißt, daß nur auf einer Seite der Meßrohre 1 eine Wandlereinrichtungen 12 angeordnet ist, während auf der anderen Seite lediglich eine passiv wirkende Masse an den Trägern 2 vorgesehen ist, die der Masse der einzigen Wandlereinrichtungen 12 des Schwingungsaufnehmers entspricht, vorliegend in Form von zwei Ausgleichsmassen 13, deren Gesamtmasse also gerade der Masse der gegenüberliegenden Wandlereinrichtung 12 entspricht, die den Schwingungsaufnehmer 4 bildet. Das Vorsehen einer Ausgleichsmasse stellt ebenfalls eine Maßnahme dar, um die Anregung von Torsionsschwingungen aufgrund von unsymmetrischen Masseverteilungen zu unterdrücken.

Im Ergebnis wird damit ein derartiges Coriolis-Massendurchflußmeßgerät bereitgestellt, bei dem der Schwingungserreger 3 sowie die Schwingungsaufnehmer 4 auf einfache Weise installiert werden können, wobei dabei ein äußerst geringer Abstand zwischen den Meßrohren 1 erzielbar ist.

## Patentansprüche

1. Massendurchflussmessgerät, das nach dem Coriolis-Prinzip arbeitet und zwei gerade Messrohre (1) und einen Schwingungswandler aufweist, wobei an den Messrohren (1) jeweils ein Träger (2) befestigt ist und der Schwingungswandler derart ausgebildet und angeordnet ist, dass er zwischen den beiden Trägern (2) wirkt, wobei die Träger (2) jeweils in einem mittleren Bereich an einem der Messrohre (1) befestigt sind, **dadurch gekennzeichnet, dass** als Schwingungswandler ein Schwingungsaufnehmer (4) vorgesehen ist, der auf einer Seite der Messrohre (1) zwischen den Trägern (2) wirkt, und auf der dem Schwingungsaufnehmer (4) gegenüberliegenden Seite eine lediglich passiv wirkende Ausgleichsmasse (13) vorgesehen ist.

2. Massendurchflussmessgerät nach Anspruch 1, **dadurch gekennzeichnet, dass** die Träger (2) derart ausgebildet und angeordnet sind, dass am Ort der Anbringung der Träger (2) der für den Schwingungswandler zur Verfügung stehende Abstand zwischen den beiden Trägern (2) größer ist als der Abstand zwischen den beiden Messrohren (1).

3. Massendurchflussmessgerät nach Anspruch 1 oder 2, **dadurch gekennzeichnet, dass** die beiden Messrohre (1) wenigstens abschnittsweise parallel zueinander verlaufen.

4. Massendurchflussmessgerät nach Anspruch 3, **dadurch gekennzeichnet, dass** die Träger (2) in einem Bereich angeordnet sind, in dem die beiden Messrohre (1) parallel verlaufen.

5. Massendurchflussmessgerät nach einem der Ansprüche 1 bis 4, **dadurch gekennzeichnet, dass** die Träger (2) jeweils längs eines 180° übersteigenden Umfangsbereichs an einem jeweiligen Messrohr (1) befestigt sind.

## Claims

1. Mass flow rate measurement device that operates using the Coriolis principle and has two straight measurement tubes (1) and a vibration converter, wherein one carrier is mounted on each of the measurement tubes (1) and the vibration converter is adapted to act between the two carriers (2), wherein the carriers (2) are each mounted on the measurement tubes (1) in a middle region, **characterized in that** a vibration sensor (4) is provided as vibration converter, which acts on one side of the measurement tubes (1) between the carriers (2), and a balancing mass (13) acting entirely passively is provided on a side opposite the vibration sensor (4).

2. Mass flow rate measurement device according to claim 1, **characterized in that** the carriers (2) are constructed and arranged such that the distance at a mounting site of the carriers (2) available between the two carriers (2) for receiving the vibration converter is greater than the distance between the two measurement tubes (1).

3. Mass flow rate measurement device according to claim 1 or 2, **characterized in that** the two measurement tubes (1) run parallel to one another at least in sections.

4. Mass flow rate measurement device according to claim 3, **characterized in that** the carriers (4) are located in the region in which the two measurement tubes (1) run parallel.

5. Mass flow rate measurement device according to any one of claims 1 to 4, **characterized in that** the carriers (2) are each attached to the respective measurement tube (1) along a peripheral region exceeding 180°.

## Revendications

1. Débitmètre massique fonctionnant suivant le principe de Coriolis et présentant deux tubes de mesure droits (1) et un convertisseur d'oscillations, un support (2) étant à chaque fois fixé aux tubes de mesure (1) et le convertisseur d'oscillations étant réalisé et disposé de telle sorte qu'il agisse entre les deux supports (2), les supports (2) étant chacun fixés dans une région centrale sur l'un des tubes de mesure (1), **caractérisé en ce que** l'on prévoit en tant que convertisseur d'oscillations un capteur d'oscillations (4) qui agit d'un côté des tubes de mesure (1) entre les supports (2) et une masse d'équilibrage (13) agissant seulement de manière passive est prévue sur le côté opposé au capteur d'oscillations (4).

2. Débitmètre massique selon la revendication 1, **caractérisé en ce que** les supports (2) sont réalisés et disposés de telle sorte qu'à l'endroit du montage des supports (2), la distance disponible pour le convertisseur d'oscillations entre les deux supports (2) soit supérieure à la distance entre les deux tubes de mesure (1).

3. Débitmètre massique selon la revendication 1 ou 2, **caractérisé en ce que** les deux tubes de mesure (1) s'étendent au moins en partie parallèlement l'un à l'autre.

4. Débitmètre massique selon la revendication 3, **caractérisé en ce que** les supports (2) sont disposés dans une région dans laquelle les deux tubes de mesure (1) s'étendent parallèlement.

5. Débitmètre massique selon l'une quelconque des revendications 1 à 4, **caractérisé en ce que** les supports (2) sont fixés chacun le long d'une région périphérique dépassant 180° sur un tube de mesure respectif (1).
